# EUROPEAN PATENT APPLICATION

(11) **EP 1 016 889 A1**
(43) Date of publication of application: **05.07.2000**
(21) Application number: 99309049.7
(22) Date of filing: 12.11.1999
(51) Int. Cl.: G02B 7/10

(54) **Floating rod in a rod and bearing system**

(30) Priority: 12.11.1998 US 108035
(71) Applicant: High End Systems, Inc., Austin, Texas 78758 (US)
(72) Inventor: Lane, John W.II c/o High End Systems, Inc., Austin, TX 78758 (US)
(74) Representative: Sarup, David Alexander

(57) **Abstract**

This invention relates to guided drive systems used for moving components in an optical system where precision, sound and weight and cost are important design considerations. The invention employs the use of resilient mounting techniques to float mount components which are conventionally rigidly mounted in order to design drive systems balancing precision, sound, weight and cost of the system.

## Description

### FIELD OF THE INVENTION

This invention relates to guided drive systems. More particularly this invention relates to drive systems for moving optical components in an optical system where precision, sound and weight and cost are important design considerations.

### BACKGROUND

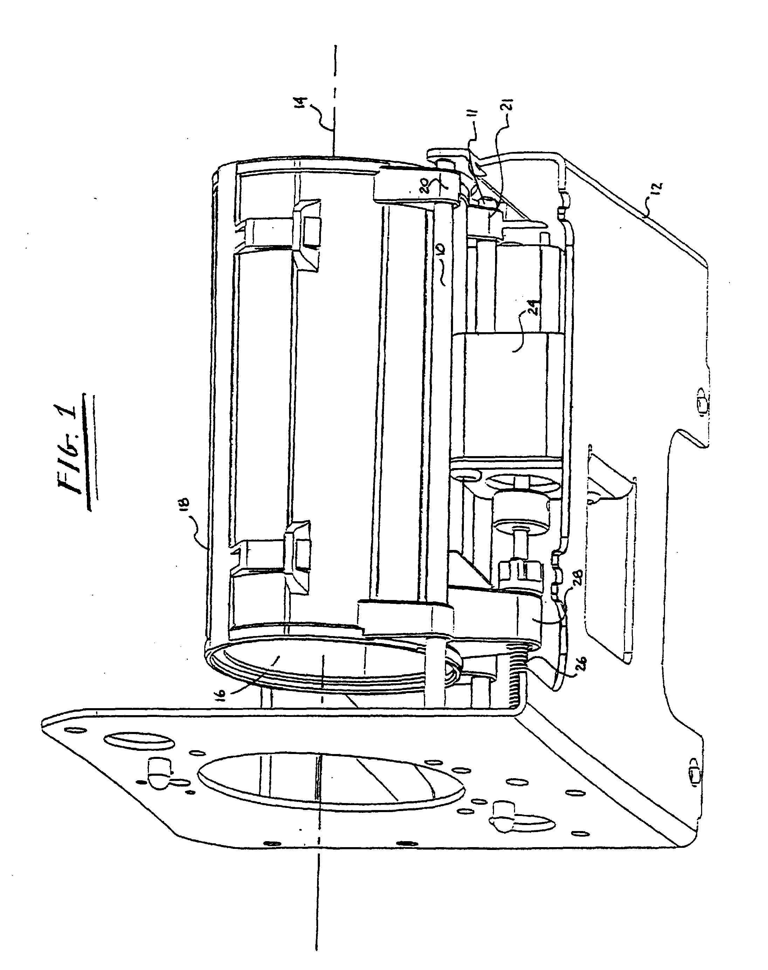

In the field of optical systems frequently it is desired to move lenses along the optical axis of the system. Different drive systems have been employed for obtaining the desired motion. In the past, single rod and bearing systems and single rod and bushing systems have been used to guide the motion of the optical components along the optical axis. For many reasons such as accuracy of movement and structural integrity, frequently multiple rod and bearing or bushing guides have been used. **Fig. 1** illustrates a dual rod and bushing guide system. Typically the rods 10 and 11 are mounted to a structure 12 in the optical system that is fixed relative to the optical axis 14 of the optical system. The optical component 16 which requires movement along the optical axis 14, is typically mounted in a frame or carrier 18 which includes or has bushings 20 mounted, or integral, to it to receive the rods 10 and 11. The optical component 16 is moved relative to the rods 10 through a drive. In **Fig. 1** a worm gear drive is shown which includes a motor 24, a worm gear 26 and a female threaded section mounted to the carrier 18. In this configuration, when the motor 24 drives the rotation of the worm gear 26, the carrier 18 if driven along the optical axis 14 guided by the rod 10 and bushing system. Since it is desirable to have very tight movement in an optical system, it is desirable to use light weight yet high tolerance rod and bearing systems. However this requires that the rods be perfectly aligned in order that the system does not bind up due to rod misalignment. Such perfect alignment is often difficult to obtain reasonably in a dual rod and bearing drive system because it requires extremely high tolerances in the mounted of the rods to the fixed member. One solution to this problem has been to use a high tolerance bushing in connection with one rod and a low tolerance bearing in connection with the second rod to provide some forgiveness in the lack of perfect alignment of the two rods. However, this solution only allows for misalignment of the rods by the decrease in the tightness of the second bushing. A better solution is desired.

The present invention is defined in the same independent claims to which reference should now be made. Preferred features are laid out in the subclaims.

### BRIEF DESCRIPTION OF THE DRAWINGS

- Fig. 1: illustrates a typical prior art dual rod and bearing guide system.
- Fig. 2: illustrates a resiliently mounted rod system.
- Fig. 3: illustrates the resiliently mounted rod in greater detail in a side view
- Fig. 4: illustrates a shoulder bolt and screw
- Fig. 5: illustrates the rod mounted resiliently to the other side of the fixed member.
- Fig. 6: illustrates the rod and bushing in greater detail.
- Fig. 7: illustrates a system where both rods in a dual rod and bearing guide system are resiliently mounted.
- Fig. 8: illustrates a system where the bushings are float mounted rather than float mounting the rods.

### DESCRIPTION OF THE PREFERED EMBODIMENT

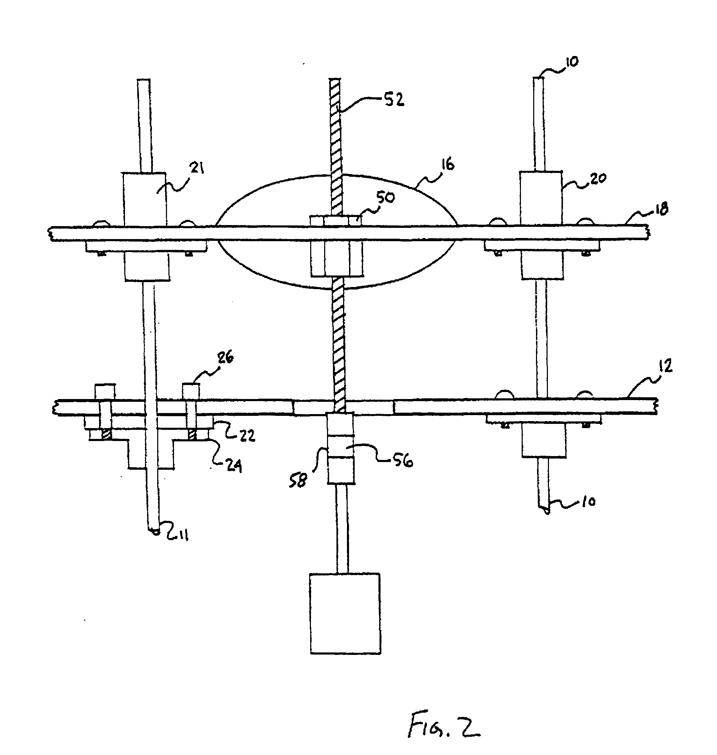

**Fig. 2** illustrated a the resiliently mounted guide system that is the subject of the present invention. The first rod 10 in this dual rod and bearing system is rigidly mounted to the fixed structural member 12 of the optical system. However, the second rod 11 in this system is resiliently/float mounted to the structural member 12. In the embodiment of the invention illustrated in **Fig. 2** the rod 11 is resiliently mounted by placing a resilient material 22 between the fixed structural member 12 and the rod mount 24. Silicon foam has been found to be a suitable material to use as the resilient material. It is important to the design that the material not readily take a compression set. Rather when compressed the material should resist compression or tension and seek to return to its original position. Silicon foam provides the desired elasticity/memory to seek its original form rather than setting as a result of compressive or tensile forces. It also can be selected to provide consistent performance over a relatively wide temperature range. However other materials are available and would also be suitable.

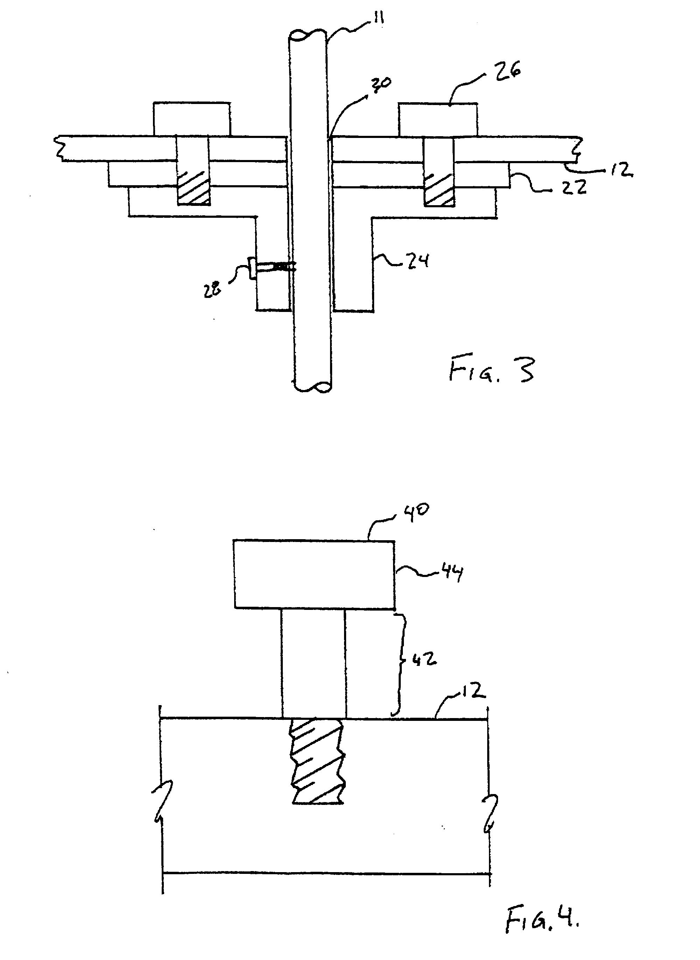

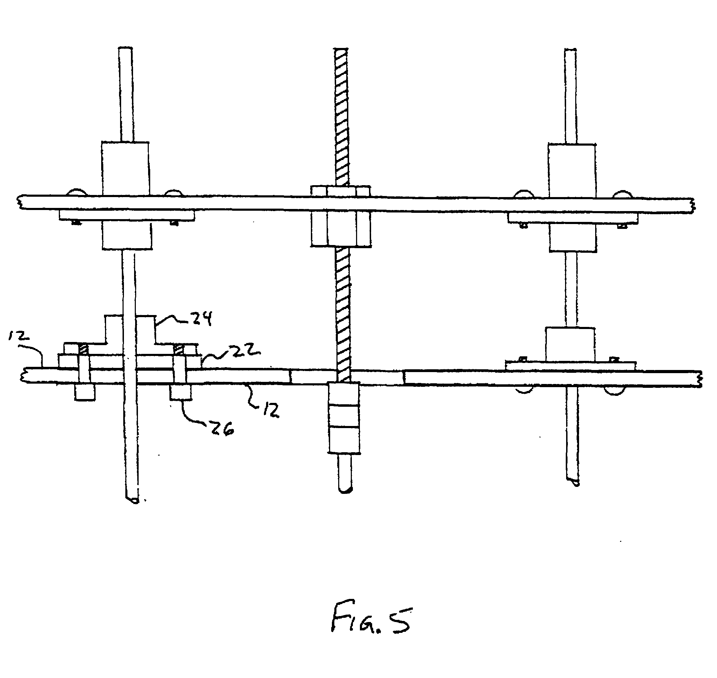

**Fig. 3** illustrated the resilient mounting of rod 11 in greater detail. The rod 11 is mounted to the mounting hub 24 by a screw 28. The rod is inserted through an opening 30 in the resilient material 22 and fixed structure 12. The assembly is held together by bolts 26. In this configuration it is desirable that the hole 30 in the fixed structure 12 for receiving the rod 11 be sufficiently large to supply sufficient tolerance to allow movement of the rod 11 relative to the fixed member 12 to compensate for misalignment of the two rods 11 and 10 from **Fig. 2.** However, it is not necessary for the rod to extend through such a hole. In another embodiment the rod flange could be mounted on the side of the fixed member from which the rod extends as illustrated in **Fig. 5**.

In the embodiment illustrated in these Figs it is desirable during the mounting of the rods that the tightness of the bolts 26 be carefully controlled. This can be done by controlling the tightening torque of the bolts. In the embodiments shown the tightness of these bolts will effect the degree of resiliency of the mount. **Fig. 4** illustrates greater detail of an alternative bolt selection that would provide for greater control of the tightness of the mount. This figure illustrated the use of a shoulder bolt 40. A shoulder bolt sets the gap 42 between the bolt head 44 and the fixed structure 12.

Now returning to **Fig. 2**. The carrier plate 18 has two bushings 20 and 21 mounted to it for receiving rods 10 and 11 respectively. The carrier plate 18 also has a female threaded section 50 mounted to it for receiving the worm gear 52. The worm gear is connected to the motor though a coupling 56. In the preferred embodiment the coupling 56 includes a resilient material 58 that provides the worm gear 52 freedom of movement to compensate for some misalignment of components. Nevertheless other suitable couplings are possible.

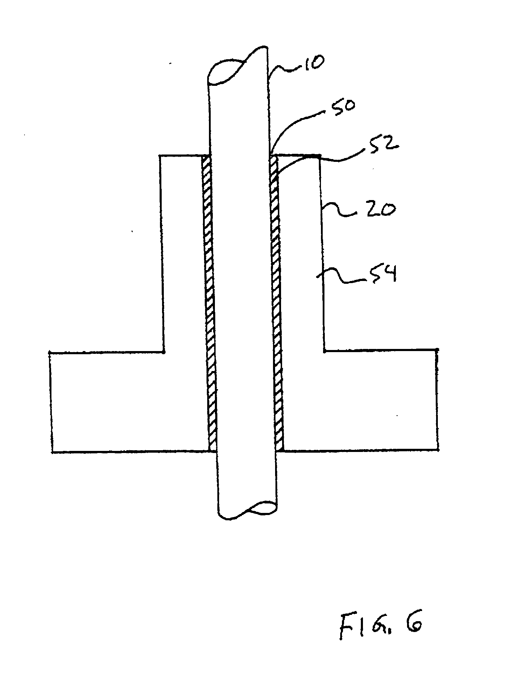

**Fig. 6** illustrates a typical rod and bushing in greater detail. The bushing 20 typically has an orifice 50 for receiving the rod 10. The bushing is comprised of the actual bushing material 52 which is held in place by a bushing housing 54. Typically, the bushing material is relatively soft in comparison to the material composition of the housing 54 and the rod 10. Softness is not necessary, the objective is to have little friction during motion between the rod 10 and the bushing material 52. For example for a steel rod, suitable bushing materials might include bronze, oil impregnated bronze, lead or lead oxide, freecon (available from Pacific Bearing) or teflon.

One advantage of a resiliently mounted rod is that it provides the rod with sufficient flexibility to adjust for misalignment of the two rods in the dual rod and bushing guide system. This allows the system to use a high tolerance bushing on each rod without causing the system to bind due to misalignment of the rods.

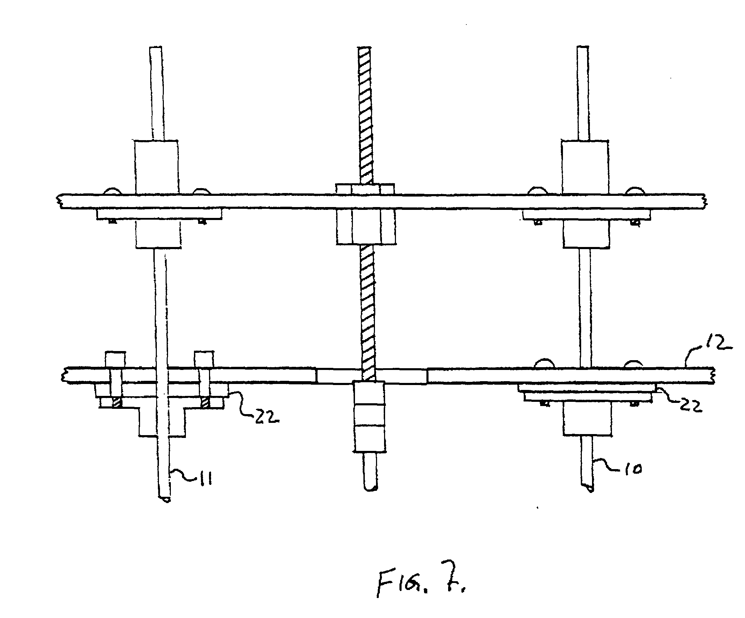

In another embodiment of the present invention is illustrated in **Fig. 7**. In this figure both of the rods are resiliently mounted to the fixed structure.

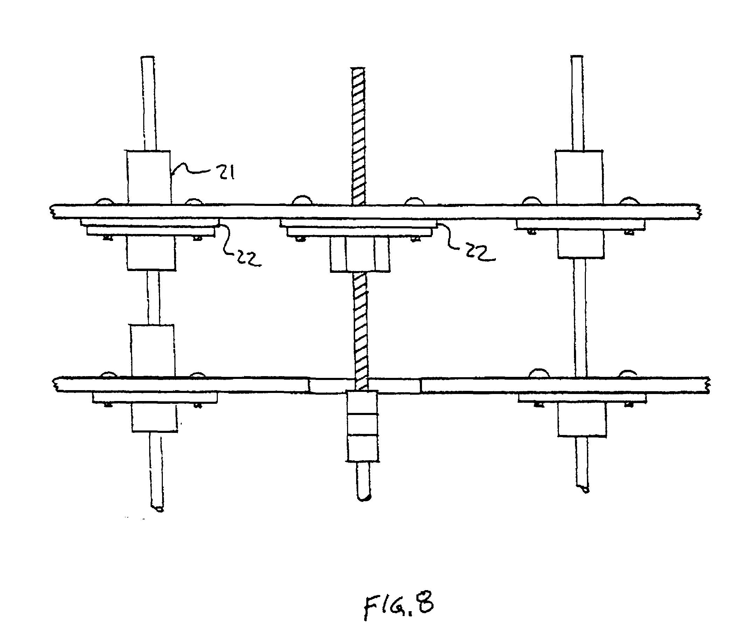

Another embodiment of the present invention is illustrated in **Fig 8**. In the system illustrated both rods 10 and 11 are fix mounted to the mounting plate 11. However the bushing 21 the mates with rod 11 is resiliently mounted to the carrier plate 18. In another embodiment both bushings might be resiliently mounted. Similarly the female threaded section 18 is resiliently mounted to the carrier plate 18. In both cases the illustration shows resilient material 22 being used for this purpose.

In the particular application which the inventor implemented his invention it was found more desirable to mount the rods resiliently because in this location the resilient material was subject to less temperature fluctuations and this was considered desirable by the inventor. However, in other applications of the invention it might be more desirable to float mount the bushings rather than the rods.

## Claims

1. An apparatus for moving an optical element along an optical train comprising:
a first shaft firmly secured parallel to the linear path;
a second shaft flexibly secured parallel to the linear path;
a holder for holding the optical element mounted on the first shaft and second shaft for movement along the linear path.

2. The apparatus of claim 1 wherein the optical holder is a plate with orifices for accepting:
the optical element;
the first shaft; and
the second shaft.

3. The apparatus of claim 11 wherein the optical element holder has a bushing for accepting the fixed shaft; and a bushing for accepting the second shaft.

4. An apparatus for moving a plate along a linear path comprising:
a mounting base,
a plate mounted on
a first shaft mounted in a fixed manner so that the shaft is parallel with the linear path of the plate; and
a second shaft mounted in a flexible manner so that the shaft is parallel with the linear path of the plate.

5. An apparatus for moving a plate along a linear path comprising:
a drive shaft firmly secured parallel to the linear path;
a flexible shaft flexibly secured parallel to the linear path;
a plate mounted to the drive and flexible shafts along the drive shaft and the flexible shaft.

6. An apparatus for guiding an optical element along an optical train in an optical system comprising:
a mounting base;
a first and second shafts mounted to the mounting base parallel to the optical train;
a optical element holder with
a bushing for receiving the first shaft fix mounted to the optical element holder
a bushing for receiving the second shaft resiliently mounted to the optical element holder.
